# EUROPÄISCHE PATENTSCHRIFT

(11) **EP 1 447 573 B1**
(45) Veröffentlichungstag und Bekanntmachung des Hinweises auf die Patenterteilung: **08.03.2006**
(21) Anmeldenummer: 04100545.5
(22) Anmeldetag: 12.02.2004
(51) Int. Cl.: F16B 7/04

(54) **Befestigungselement**
Fastening device
Dispositif d'attache

(30) Priorität: 15.02.2003 DE 10306354
(43) Veröffentlichungstag der Anmeldung: 18.08.2004
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- DE-A- 1 806 087
- DE-A- 10 156 223
- US-A- 3 082 807

## Beschreibung

### Technisches Gebiet

Die Erfindung betrifft ein Befestigungselement mit zumindest einem Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung, der im Oberbegriff des Patentanspruchs 1 genannten Art.

### Stand der Technik

Befestigungselemente der genannten Art dienen zum Befestigen eines Gegenstandes beispielsweise an einer C-förmigen Montageschiene. Die zur Anwendung gelangende Montageschiene kann hierzu beispielsweise an einem Untergrund befestigt sein. Das Befestigungselement wird in die Montageöffnung eingeführt und beispielsweise mittels einer Drehbewegung um 90° verdreht, so dass ein Hintergreifteil des Befestigungselements die Haltevorsprünge der Montageschiene hintergreift. In dieser Vorfixierung ist es möglich das Befestigungselement in Längsrichtung der Montageschiene zwecks Justierung zu verschieben. Um eine endgültige Befestigung des Befestigungselements an der Montageschiene zu bewirken, wird das Hintergreifteil gegenüber einem Anschlag, beispielsweise durch eine Gewindestange, verspannt und damit an den Haltevorsprüngen festgeklemmt. Diese Gattung von Befestigungselementen eignet sich beispielsweise zum Befestigen von länglichen Gegenständen oder Leitungssträngen, wie Rohren oder dergleichen.

Aus dem Stand der Technik sind verschiedene Ausführungen solcher, sogenannten Schienenmuttern bekannt. Beispielsweise zeigt die DE 38 11 974 A1 eine federbeaufschlagte Schiebemutter, bei der die Randstege der C-förmigen Schiene im verdrehten Zustand in die Längsnuten der Schiebemutter eingreifen.

Die DE 196 35 632 A1 zeigt eine Schienenmutter, deren Quererstreckung in die schlitzartige Öffnung der C-förmigen Profilschiene einführbar ist und deren Längserstreckung grösser als die lichte Weite der schlitzartigen Öffnung ist, so dass nach dem Verdrehen der Schienenmutter diese die Ränder der schlitzartigen Öffnung hintergreift.

Die DE 196 17 750 C1 zeigt eine in die Montageöffnung einer C-förmigen Montageschiene einführbare und verdrehbare Schienenmutter, die über ein Rückstellelement beim Setzvorgang zum Hintergreifen der Längsränder der Montageöffnung ausgerichtet wird. Die Schienenmutter weist eine Quererstreckung auf, die kleiner als die lichte Weite der Montageöffnung ist, und weist eine Längserstreckung auf, die grösser als die lichte Weite der Montageöffnung ist.

Aus der DE 100 52 534 A ist ein Befestigungselement bekannt, das ein, in die Montageöffnung eines Hohlkörpers einführbares und im Innern des Hohlkörpers zum Hintergreifen der Längsränder der Montageöffnung verdrehbares Hintergreifteil aufweist. Mittels diesem Befestigungselement können beispielsweise Winkelelemente zum Verbinden zweier Montageschienen miteinander an den Montageschienen befestigt werden.

Nachteilig an den bekannten Lösungen ist, dass die Länge der Kontaktfläche der Hintergreifteile durch die Schlitzbreite der Montageschiene begrenzt ist, womit nur eine begrenzte Grösse von Querkräften von den bekannten Ausführungen der Befestigungselemente übernommen werden kann. Bei geneigt oder vertikal geführten Leitungssträngen oder bei Leitungssträngen in deren Längsachse Belastungen sowie bei Verbindungsvorrichtungen für zwei Montageschienen auftreten, sind die auf das Befestigungselement wirkenden Querkräfte von wesentlicher Bedeutung.

Aus der DE 18 06 087 A1 ist Reihenschelle mit einem U-förmigen Grundkörper zum Befestigen von elektrischen Leitungen und/oder Rohren an einer C-förmigen Halteschiene bekannt. Die federnden Schenkel des U-förmigen Grundkörpers bilden an ihren freien Enden zwei Leistenabschnitte aus, die jeweils einen Distanzabschnitt und einen Winkelabschnitt aufweisen. Zusätzlich ist an den Schenkeln jeweils ein Anschlag zur stimaussenseitigen Beaufschlagung der, die Montageöffnung begrenzenden Ränder der C-förmigen Halteschiene vorgesehen. Weiter ist zum Festlegen der in die Montageöffnung der C-förmigen Halteschiene eingeführten Reihenschelle ein Befestigungsmittel mit einem Spreizkörper vorgesehen, der im Querschnitt eine im Wesentlichen rechteckige Ausgestaltung sowie jeweils an zumindest zwei diametral gegenüberliegenden Seiten eine Steuerungskontur mit einer gewölbten Fläche aufweist. Nach dem Einführen der Reihenschelle in die Montageöffnung und vor dem Verspannen hintergreifen die Winkelabschnitte bereits die freien Ränder der Haltevorsprünge der C-förmigen Halteschiene. Bei Betätigung des Befestigungsmittels von der ersten Stellung in die zweite Stellung werden die Leistenabschnitte lateral versetzt und die Reihenschelle mit der C-förmigen Halteschiene verspannt.

### Darstellung der Erfindung

Der vorliegenden Erfindung liegt die Aufgabe zugrunde, ein Befestigungselement zu schaffen, das die Befestigung auch unter Einwirkung von Querkräften gewährleistet und einfach in Montageöffnungen eines Hohlkörpers an einer beliebigen Stelle entlang dessen Längsachse montierbar ist.

Die Aufgabe ist durch die Merkmale des Anspruchs 1 gelöst. Gemäss der Erfindung umfasst ein Befestigungselement zumindest ein Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung, sowie zumindest einen Anschlag zur stirnaussenseitigen Beaufschlagung der, die Montageöffnung begrenzenden Ränder der Hohlkörperlängsseiten, und zumindest ein Befestigungsmittel, bei dessen Betätigung das zumindest eine Hintergreifteil von der ersten Stellung in die zweite Stellung bringbar ist.

Das zumindest eine Hintergreifteil weist zumindest zwei Leistenabschnitte auf, die jeweils einen Distanzabschnitt und einen Winkelabschnitt umfassen. Das Befestigungsmittel weist einen Spreizkörper zur lateralen Versetzung des zumindest einen Hintergreifteils von der ersten Stellung in die zweite Stellung auf. Der Spreizkörper weist im Querschnitt eine im Wesentlichen rechteckige Ausgestaltung sowie jeweils an zumindest zwei diametral gegenüberliegenden Seiten eine Steuerungskontur mit einer gewölbten Fläche auf. Jeder der Leistenabschnitte ist an dem zumindest einen Anschlag beweglich gelagert. Der Spreizkörper des Befestigungsmittels weist am setzungsrichtungsseitigen Ende eine Verbreiterung des Querschnitts zum Hintergreifen der Winkelabschnitte auf.

Die Länge der Leistenabschnitte kann im Wesentlichen in Abhängigkeit der aufzunehmenden Querkräfte festgelegt werden und ist, wie bei den bekannten Ausführungen, nicht durch die lichte Breite der Montageöffnung des Hohlkörpers bestimmt. In der ersten Stellung weist das zumindest eine Hintergreifteil eine Breite auf die kleiner als die lichte Breite der Montageöffnung des Hohlkörpers ist. Mittels des Befestigungsmittels werden bei dessen Betätigung die Leistenabschnitte mittels des Spreizkörpers seitlich in Richtung der im Hohlkörperinneren vorgesehenen Haltevorsprünge auseinander gedrückt, so dass diese die Haltevorsprünge hintergreifen. Das erfindungsgemässe Befestigungselement kann vor dessen Fixierung bis zum Erreichen der gewünschten Position an dem Hohlkörper entlang der Montageöffnung verschoben und anschliessend an dem Hohlkörper fixiert werden.

Das Befestigungselement wird beispielsweise an einer C-förmigen Montageschiene angeordnet, deren Ränder im Bereich der Montageöffnung nach innen umgebogen sind und die Haltevorsprünge für das Hintergreifteil ausbilden. Das erfindüngsgemässe Befestigungselement kann des Weiteren auch an einem kastenförmigen oder sogar an einem plattenförmigen Bauteil vorgesehen werden, das eine für das Einführen des zumindest einen Hintergreifteils geeignete Montageöffnung aufweist. Dabei werden die Randbereiche der Montageöffnung in der zweiten Stellung des zumindest einen Hintergreifteils von den Leistenabschnitten hintergriffen.

Bei hohen Querkräften sind vorzugsweise zwei oder mehr Leistenabschnitte auf jeder Seite des Hintergreifteils vorgesehen. Das Befestigungsmittel ist entweder derart ausgebildet, dass es die Mehrzahl der Leistenabschnitte lateral versetzen kann, oder es sind mehrere Befestigungsmittel an einem Anschlag angeordnet, die jeweils zwei diametral gegenüberliegende Leistenabschnitte bei der Betätigung des entsprechenden Befestigungsmittels von der ersten Stellung in die zweite Stellung lateral versetzen.

Die zumindest zwei Leistenabschnitte des zumindest einen Hintergreifteils umfassen jeweils einen Distanzabschnitt und einen Winkelabschnitt. Der Distanzabschnitt des Leistenabschnitts weist zumindest eine Erstreckung auf, die der Erstreckung der Haltevorsprünge, beziehungsweise die entsprechende Wandstärke des Körpers in Setzungsrichtung des Befestigungselements entspricht. Der Winkelabschnitt dient dem Hintergreifen der Haltevorsprünge, beziehungsweise des Randbereichs des Körpers, und ist in einem Winkel zu dem Distanzabschnitt in Richtung des zu hintergreifenden Haltevorsprungs, beziehungsweise des zu hintergreifenden Randbereichs ausgerichtet. Vorzugsweise schliesst der Winkelabschnitt mit dem Distanzabschnitt einen stumpfen Winkel ein. Der Winkel zwischen dem Winkelabschnitt und dem Distanzabschnitt ist bevorzugt derart gewählt, dass die Kontaktfläche des Winkelabschnitts mit dem Haltevorsprung, beziehungsweise mit dem Randbereich in der zweiten Stellung des Leistenabschnitts im Wesentlichen parallel zu der Kontaktfläche des freien Randes des Haltevorsprungs, beziehungsweise des Randbereichs zu liegen kommt.

Der Spreizkörper des Befestigungsmittels weist im Querschnitt eine im Wesentlichen rechteckige Ausgestaltung auf, wobei der Spreizkörper jeweils an zumindest zwei diametral gegenüberliegenden Seiten eine Steuerungskontur mit einer gewölbten Fläche aufweist. Der Spreizkörper ist im Wesentlichen als Excenter ausgebildet, der die Leistenabschnitte des Hintergreifteils lateral versetzt. Sind beispielsweise die Leistenabschnitte an dem zumindest einen Anschlag gelenkig gelagert, werden bei der Betätigung des Befestigungsmittels diese gegen die Haltevorsprünge des Hohlkörpers und deren Winkelabschnitte unter die Haltevorsprünge verschwenkt.

Der grosse Anfangsweg der Leistenabschnitte des Hintergreifteils wird über das Querstellen der flachen Querschnittskontur des Spreizkörpers überbrückt. Unter Einwirkung der gewölbten Fläche der Steuerungskontur auf die Leistenabschnitte wird der Festsitz des Hintergreifteils durch Weiterdrehen des Befestigungsmittels erreicht. Die gewölbte Fläche der Steuerungskontur ist vorzugsweise nicht über die gesamte Länge der entsprechenden Seite der Querschnittskontur geführt. Der neben der gewölbten Fläche angrenzende Abschnitt dient als Anschlag für der Spreizkörper und verhindert ein ungewolltes Überdrehen des Befestigungsmittels. Über die Winkelstellung des Winkelabschnitts zum Distanzabschnitt der Leistenabschnitte und die Ausgestaltung der gewölbten Fläche der Steuerungskontur des Spreizkörpers können allfällige Toleranzen zwischen den einzelnen Teilen des erfindungsgemässen Befestigungselements und/oder an dem Hohlkörper ausgeglichen werden.

Der Spreizkörper des Befestigungsmittels weist am setzungsrichtungsseitigen Ende eine Verbreiterung des Querschnitts auf. Die Verbreiterung des Spreizkörpers ist bevorzugt als umlaufender Bund ausgebildet, wobei der Übergangsbereich vom Spreizquerschnitt zum Bund beispielsweise als Konus, vorzugsweise als Kegelstumpf ausgebildet ist. Damit wird bei der Verspannung des erfindungsgemässen Befestigungselements die Winkelabschnitte der Leistenabschnitte gegen die freien Enden der Haltevorsprünge, beziehungsweise gegen die Randbereiche gepresst. Diese Verbreiterung verbessert des Weiteren den Toleranzausgleich der Verbindung zwischen dem erfindungsgemässen Befestigungselement und dem Hohlkörper, überträgt zusätzlich Axialkräfte auf das Hintergreifteil und entlastet die bewegliche Lagerung der Leistenabschnitte an dem zumindest einen Anschlag.

Vorzugsweise ist jeder Leistenabschnitt an dem Anschlag gelenkig gelagert. Die Leistenabschnitte werden in dieser Ausführungsform des erfindungsgemässen Befestigungselements durch Verschwenken von der ersten Stellung des Hintergreifteils in die zweite Stellung des Hintergreifteils gebracht. In einer Variante dazu sind die Leistenabschnitte beispielsweise seitlich verschiebbar an dem zumindest einen Anschlag gelagert.

Für einen verbesserten Eingriff des Winkelabschnitts mit dem Hattevorsprung, beziehungsweise mit dem Randbereich ist dessen Kontaktfläche vorteilhaft mit einer Profilierung versehen, z. B. mit einer Rändelung. Vorzugsweise ist auch an dem freien Rand des Hältevorsprungs, beziehungsweise an dem Randbereich eine Profilierung vorgesehen, z. B. eine Rändelung, so dass die Rändelungen des Haltevorsprungs, beziehungsweise des Randbereichs mit der Rändelung an dem Winkelabschnitt zusammenwirken können. Für einen optimalen Eingriff des Hintergreifteils mit den Haltevorsprüngen, beziehungsweise mit den Randbereichen sind die Profilierungen an den Winkelabschnitten auf die Profilierung an den Haltevorsprüngen, beziehungsweise an den Randbereichen aufeinander abgestimmt.

Vorteilhafterweise weist der Distanzabschnitt eine kürzere Längenerstreckung als der Winkelabschnitt auf. In dieser Variante des Leistenabschnitts weist dieser in der Seitenansicht im Wesentlichen eine T-förmige Ausgestaltung auf, wobei der horizontale Teil der T-förmigen Ausgestaltung von dem Winkelabschnitt gebildet ist und das Distanzteil den vertikalen Teil der T-förmigen Ausgestaltung ausbildet. Das freie Ende des Distanzteils ist an dem zumindest einen Anschlag beweglich gelagert. Mit dieser Ausführungsform kann mit einem Befestigungsmittel das Hintergreifteil von der ersten Stellung in die zweite Stellung versetzt werden und gleichzeitig wird eine ausreichende Anlagefläche der Winkelabschnitte an den Haltevorsprüngen, beziehungsweise an den Randbereichen des Körpers geschaffen, so dass entsprechend grosse Querkräfte von dem, an dem Hohlkörper fixierten erfindungsgemässen Befestigungselement übernommen werden können.

Vorzugsweise sind die zumindest zwei Leistenabschnitte des zumindest einen Hintergreifteils mit einem Federelement in der ersten Stellung gehalten. Das Federelement umfasst beispielsweise einen Federring oder ein Gummiband. Das Federelement dient einerseits als Transport- und Lagersicherung, die das Hintergreifteil des erfindungsgemässen Befestigungselements in der ersten Stellung zum Einführen in die Montageöffnung eines Hohlkörpers hält. Andererseits wirkt in der zweiten Stellung des Hintergreifteils eine Federkraft auf die Leistenabschnitte, die bei einem Lösen des Befestigungsmittels die Leistenabschnitte gegen der Spreizkörper drückt und ein erleichtertes Umpositionieren des erfindungsgemässen Befestigungselements entlang der Montageöffnung ermöglicht. Des Weiteren wird eine allfällige Demontage des erfindungsgemässen Befestigungselements erleichtert, da beim Lösen der Fixierung des Befestigungselements die Leistenabschnitte von der zweiten Stellung in die erste Stellung streben. Vorteilhafterweise ist die Federkraft des Federelements derart gewählt, dass sich die Leistenabschnitte des Hintergreifteils mittels des Befestigungsmittels leicht von der ersten Stellung in die zweite Stellung versetzen lassen und somit der Setzvorgang des erfindungsgemässen Befestigungselements nicht durch eine schwer zu überwindbare Kraft unnötig erschwert wird.

Vorzugsweise weist das Befestigungsmittel an dessen, entgegen der Setzungsrichtung liegendem Ende ein Drehmomentübertragungsmittel, optional einen Sechskant auf. Mittels des Drehmomentübertragungsmittels ist das Befestigungsmittel mit einem einfachen Werkzeug oder von Hand betätigbar. Bevorzugt ist an dem Spreizkörper ein metrischer oder zölliger Sechskant ausgeformt. Das Befestigungsmittel kann auch zweiteilig ausgebildet sein, wobei der Spreizkörper an dessen entgegen der Setzungsrichtung liegenden Ende ein Aussengewinde aufweist, an dem eine Mutter, z. B. eine handelsübliche Sechskantmutter, angeordnet ist. Damit kann die Verbindung zwischen dem erfindungsgemässen Befestigungselement und dem Hohlkörper nach der lateralen Versetzung der Leistenabschnitte des Hintergreifteils zusätzlich axial verspannt werden. Die Mutter ist beispielsweise mittels Verstauchen oder mittels einem Sicherungslack in deren Ausgangsstellung verdrehgesichert. In einem ersten Schritt wird bei der Betätigung der Mutter der Spreizkörper mitgedreht und weitet das Hintergreifteil auf, wobei das erfindungsgemässe Befestigungselement vorfixiert wird. Durch Weiterdrehen der Mutter löst sich die Verdrehsicherung zwischen dem Spreizkörper und der Mutter, so dass das erfindungsgemässe Befestigungselement an dem Hohlkörper infolge des axialen Versatzes des Spreizkörpers verspannt wird.

Bevorzugt weist das Befestigungsmittel eine Setzmarkierung, optional eine optische Setzmarkierung auf. Die Setzmarkierung gewährleistet eine sichere Montage und eine Kontrolle der erstellten Verbindung seitens eines Anwenders und/oder eines Kontrollierenden, z. B. eines Qualitätsprüfers. Vorteilhafterweise ist eine optische Setzmarkierung beispielsweise an dem von aussen sichtbaren Drehmomentübertragungsmittel vorgesehen, beispielsweise an einem äusseren Bolzenende. Optische Setzmarkierungen umfassen z. B. Kerben, Gravierungen, Ätzungen oder Farbmarkierungen, die beispielsweise die Form einer Linie, eines Kreises oder eines Pfeils aufweisen. Durch die geänderte Ausrichtung der optischen Setzmarkierung, beispielsweise durch eine Änderung der ursprünglichen Ausrichtung um 90°, wird dem Anwender die korrekte Ausrichtung des Befestigungsmittels kommuniziert, bei der das erfindungsgemässe Befestigungselement zur Aufnahme der Lasten ausgerichtet ist.

Vorzugsweise umfasst der Anschlag einen Winkel. Der Winkel ermöglicht die Verbindung zweier Hohlkörper, beispielsweise zweier C-förmigen Montageschienen, wobei die eine Montageschiene stirnseitig an einer beliebigen Stelle entlang der Montageöffnung der anderen Montageschiene angeordnet werden kann. Bevorzugt ist der Winkel werkseitig als ein Konstruktionsteil mit allen Elementen des Befestigungselements versehen. Bei einem zweischenkligen Winkel ist z. B. an jedem Schenkel des Winkels jeweils ein Befestigungsmittel mit jeweils einem, durch dieses Befestigungsmittel betätigbaren Hintergreifteil vorgesehen.

Das Befestigungselement oder zumindest Teile davon sind vorzugsweise aus einem Blech mittels einem Stanz-/Biegeverfahren gefertigt. Des Weiteren ist die Verwendung eines, die geeigneten Materialeigenschaften aufweisenden Kunststoffs zur Herstellung zumindest einiger Teile des erfindungsgemässen Befestigungselements denkbar.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand dreier Ausführungsbeispiele näher erläutert Es zeigen:
- Fig. 1a-c: Jeweils einen Schnitt durch ein erstes Ausführungsbeispiel des erfindungsgemässen Befestigungselements in der ersten Stellung, in einer Zwischenstellung und in der zweiten Stellung des Hintergreifteils;
- Fig. 2a-c: jeweils einen Horizontalschnitt durch das erste Ausführungsbeispiel des erfindungsgemässen Befestigungselements in der ersten Stellung, in einer Zwischenstellung und in der zweiten Stellung des Hintergreifteils in Bezug auf die Fig. 1a-1c;
- Fig. 3a, b: je einen Schnitt durch ein zweites Ausführungsbeispiels des erfindungsgemässen Befestigungselements in der ersten Stellung und in der zweiten Stellung des Hintergreifteils;
- Fig. 4a, b: je einen Schnitt durch ein drittes Ausführungsbeispiels des erfindungsgemässen Befestigungselements in der ersten Stellung und in der zweiten Stellung des Hintergreifteils; und
- Fig. 5: einen Schnitt, beziehungsweise eine Ansicht auf einen Leistenabschnitt des Hintergreifteils entlang der Linie V-V in der Fig. 4a.

Grundsätzlich sind in den Figuren gleiche Teile mit den gleichen Bezugszeichen versehen.

### Wege zur Ausführung der Erfindung

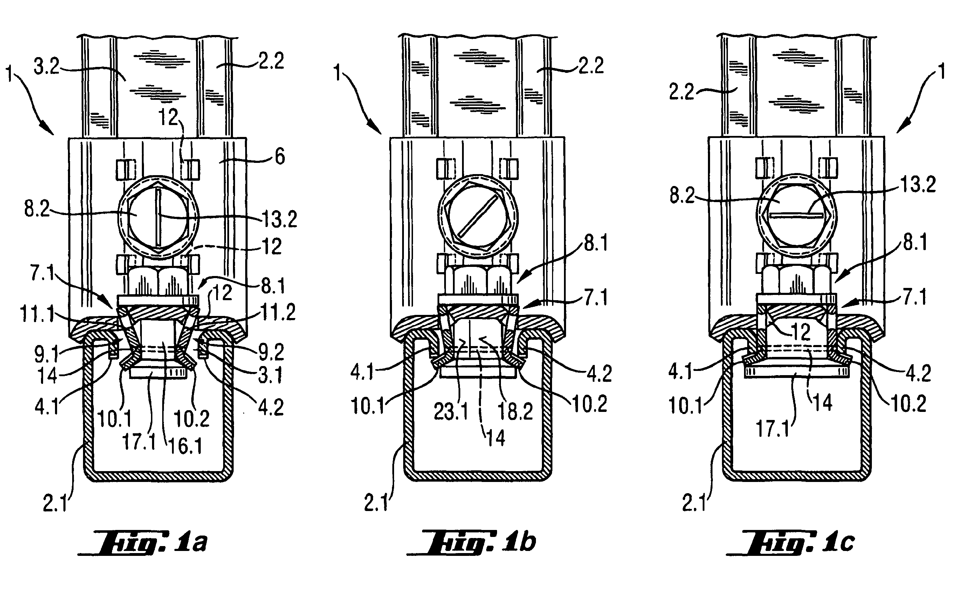

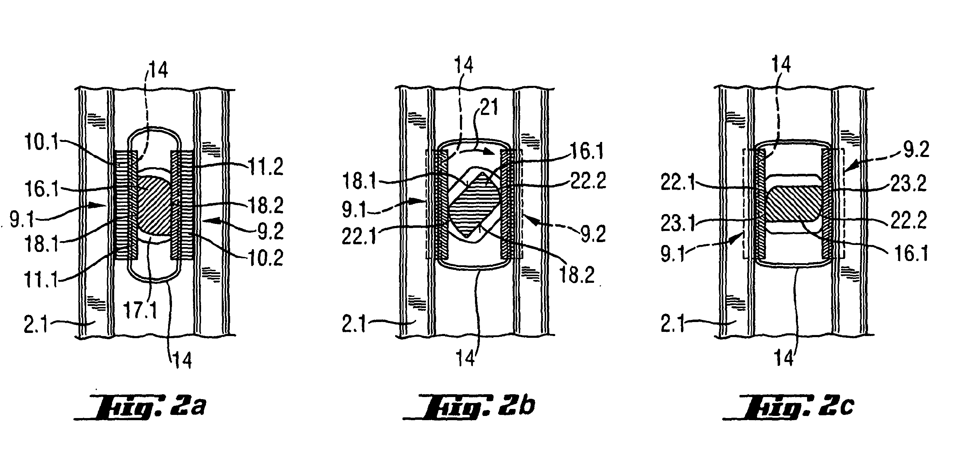

In der Fig. 1a ist ein Schnitt durch ein erstes Ausführungsbeispiels des erfindungsgemässen Befestigungselements in der ersten Stellung gezeigt. Fig. 2a zeigt den Horizontalschnitt in Bezug auf die Stellung des erfindungsgemässen Befestigungselements in der Fig. 1a. Das Befestigungselement 1 wird zum Verbinden zweier C-förmiger Montageschienen 2.1 und 2.2 angeordnet Die Montageschienen 2.1 und 2.2 weisen jeweils an einer, ihrer Längsaussenseiten eine, in der Längsachse der jeweiligen Montageschiene 2.1 oder 2.2 verlaufende Montageöffnung 3.1, bzw. 3.2 auf.

Das Befestigungselement 1 weist als Anschlag einen zweischenkligen Winkel 6 auf zur stimaussenseitigen Beaufschlagung der, die Montageöffnung 3.1, bzw. 3.2 begrenzenden Ränder der C-förmigen Montageschiene 2.1, bzw. 2.2. An jedem Schenkel des Winkels 6 ist jeweils ein Hintergreifteil, z. B. 7.1, gelenkig und ein Exzenterbolzen 8.1, bzw. 8.2 zur Betätigung des Hintergreifteils, z. B. 7.1, angeordnet.

Nachfolgend wird der Aufbau und die Funktion der Hintergreifteile und der Exzenterbolzen des Befestigungselements 1 anhand des Hintergreifteils 7.1 und des Exzenterbolzens 8.1 dargelegt. Die gemachten Ausführungen gelten für das zweite Hintergreifteil sowie den zweiten Exzenterbolzen 8.2 am anderen Schenkel des Winkels 6 sinngemäss. Das Hintergreifteil umfasst zwei Leistenabschnitte 9.1 und 9.2. Die Leistenabschnitte 9.1 und 9.2 weisen jeweils einen Winkelabschnitt 10.1, bzw. 10.2 sowie einen Distanzabschnitt 11.1, bzw. 11.2 auf. Der Winkelabschnitt 10.1, bzw. 10.2 schliesst mit dem angrenzenden Distanzabschnitt 11.1, bzw. 11.2 einen stumpfen Winkel ein. Das freie Ende des Distanzabschnitts 11.1, bzw. 11.2 ist in Öffnungen (z. B. in den Öffnungen 12) in dem Winkel 6 eingesetzt und um diese Halterung schwenkbar. Die Erstreckung der Distanzabschnitte 11.1 und 11.2 ist derart gewählt, dass die an diesen angeordneten Winkelabschnitte 10.1, bzw. 10.2 unter die freien Rändern 4.1 und 4.2 der Montageschiene 2.1 geschwenkt werden können und mit diesen in Eingriff bringbar sind.

An den Winkelabschnitten 10.1 und 10.2 ist an der Fläche, die mit den freien Rändern 4.1 und 4.2 der Montageschiene 2.1 beim Verspannen des Befestigungselements 1 in Eingriff kommt, eine Rändelung vorgesehen. Für eine hochbelastbare Verbindung zwischen dem Hintergreifteil 7.1 und den freien Rändern 4.1 und 4.2 der Montageschiene 2.1 sind die freien Ränder 4.1 und 4.2 ebenfalls mit einer Rändelung versehen. Vorzugsweise sind die beiden, miteinander in Eingriff bringbaren Rändelungen aufeinander abgestimmt.

An dem Schraubenkopf des Exzenterbolzens 8.2, wie auch an dem Schraubenkopf des Exzenterbolzens 8.1 (hier nicht dargestellt), ist eine Setzmarkierung in Form einer Kerbe 13.2 angeordnet, die dem Anwender vermittelt, dass sich das zugehörige Hintergreifteil 7.2, bzw. 7.1, in der ersten Stellung, der sogenannten Einführstellung befindet. Das Hintergreifteil 7.1 wird mittels des ringförmigen Federelements 14 in der Einführstellung zum Einführen des Befestigungselements 1 in die Montageschiene 2.1, bzw. 2.2 gehalten.

Der Exzenterbolzen 8.1 weist einen Spreizkörper 16.1 auf, der an seinem in Setzungsrichtung liegenden Ende mit einer konusartigen Verbreiterung 17.1 des Querschnitts versehen ist. Die Verbreiterung 17.1 ist um den gesamten Spreizkörper 16.1 geführt und hintergreift in jeder Stellung des Exzenterbolzens 8.2 die Winkelabschnitte 10.1 und 10.2. In der Einführstellung liegen die Distanzabschnitte 11.1 und 11.2 der Leistenabschnitte 9.1, bzw. 9.2 an den flachen Querschnittskonturen 18.1 und 18.2 des Spreizkörpers 16.1 an.

Fig. 1b zeigt das erste Ausführungsbeispiel des erfindungsgemässen Befestigungselements in einer Zwischenstellung. Fig. 2b zeigt den Horizontalschnitt in Bezug auf die Stellung des erfindungsgemässen Befestigungselements in der Fig. 1b. Durch Drehen des Exzenterbolzens 8.1, beispielsweise im Uhrzeigersinn (in Richtung des Pfeils 21), werden die Winkelabschnitte 10.1 und 10.2 mit den freien Rändern 4.1, bzw. 4.2 der Montageschiene 2.1 sukzessiv in Eingriff gebracht. Dabei wird das ringförmige Federelement 14 aufgeweitet. Mittels der dabei entstehenden Federspannung auf die Leistenabschnitte 9.1 und 9.2 ist ein Umpositionieren eines nachträglich entspannten Befestigungselements 1 ermöglicht.

Der grosse Anfangsweg der lateralen Versetzung des Hintergreifteils 7.1 wird durch das Querstellen der flachen Querschnittskonturen 18.1 und 18.2 des Spreizkörpers 16.1 überbrückt. Durch Weiterdrehen des Exzenterbolzens 8.1 in Richtung des Pfeils 21 sowie unter Einwirkung des Exzenterbogens 22.1 auf den Leistenabschnitt 9.1 und unter Einwirkung des Exzenterbogens 22.2 auf den Leistenabschnitt 9.2 wird der Festsitz des Hintergreifteils 7.1 erreicht.

Fig. 1c zeigt das erste Ausführungsbeispiel des erfindungsgemässen Befestigungselements in der zweiten Stellung des Hintergreifteils. Fig. 2c zeigt den Horizontalschnitt in Bezug auf die Stellung des erFndungsgemässen Befestigungselements in der Fig. 1c. In der zweiten Stellung sind die Winkelabschnitte 10.1 und 10.2 des Hintergreifteils 7.1 zum Hintergreifen der freien Ränder 4.1 und 4.2 der Montageschiene 2.1 ausgerichtet. Dabei werden die Winkelabschnitte 10.1 und 10.2 durch die konusartige Verbreiterung 17.1 zusätzlich gegen die freien Ränder 4.1 und 4.2 gedrückt. Anhand der Ausrichtung der Kerbe 13.2 des Exzenterbolzens 8.2 erkennt der Anwender die sichere Montage des Befestigungselements 1 an der Montageschiene 2.1, bzw. 2.2.

Die Exzenterbögen 22.1 und 22.2 sind nicht über die gesamte kürzere Querschnittlänge des Spreizkörpers 16.1 geführt. Die an die Exzenterbögen 22.1 und 22.2 angrenzenden Flächen 23.1 und 23.2 dienen als Anschlag und Überdrehsicherung für den Spreizkörper 16.1. Damit wird ein Überdrehen des Exzenterbolzens 8.1 verhindert und die Sicherheit der Anwendung des Befestigungselements 1 gewährleistet.

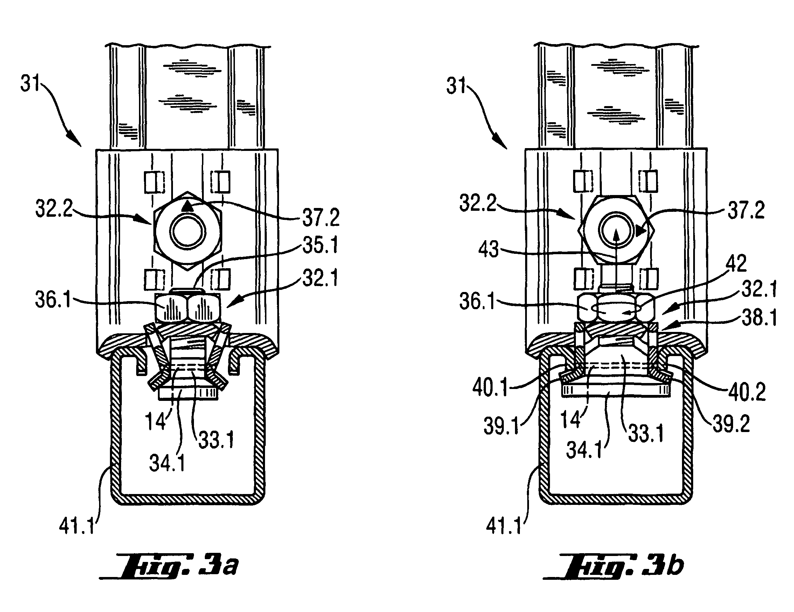

Die Fig. 3a stellt einen Schnitt durch ein zweites Ausführungsbeispiels des erfindungsgemässen Befestigungselements in der ersten Stellung des Hintergreifteils dar und die Fig. 3b stellt einen Schnitt durch das zweite Ausführungsbeispiel des erfindungsgemässen Befestigungselements in der zweiten Stellung des Hintergreifteils dar. Das Befestigungselement 31 ist im Wesentlichen analog dem Befestigungselement 1 ausgebildet. Der Exzenterbolzen 32.1 und der Exzenterbolzen 32.2 sind zweiteilig ausgeführt. Der Exzenterbolzen 32.1 umfasst einen Spreizkörper 33.1, der an dem, in Setzungsrichtung abgewandten Ende mit einem Aussengewinde 35.1 versehen ist. An dem Aussengewinde 35.1 ist eine Mutter 36.1 angeordnet Die Mutter 36.1 ist zum Verdrehen des Spreizkörpers 33.1 mittels eines Sicherungslacks in der Ausgangsposition festgesetzt An der, dem Anwender zugewandten Fläche am freien Ende des Exzenterbolzens 32.2 ist eine aufgeäzte Setzmarkierung in Form eines Pfeils 37.2 vorgesehen.

Durch Betätigen der festgesetzten Mutter 36.1 wird das Hintergreifteil 38.1 von der ersten Stellung in die zweite Stellung verschwenkt. Sobald die Winkelabschnitte 39.1 und 39.2 zum Hintergreifen der freien Ränder 40.1, bzw. 40.2 der Montageschiene 41.1 ausgerichtet sind, wird durch die, beim Befestigungselement 1 bereits beschriebene, Ausgestaltung des Querschnitts des Spreizkörpers 33.1 ein Weiterdrehen des Exzenterbolzens 32.1 verhindert. Dies wird dem Anwender durch die Ausrichtung der Setzmarkierung, z. B. des Pfeils 37.2 des Exzenterbolzens 32.2, visuell mitgeteilt.

Mittels Weiterdrehen der Mutter 36.1 in die ursprüngliche Verspannrichtung des Exzenterbolzens 32.1, z. B. in Richtung des Pfeils 42, wird die Verbindung zwischen der Mutter und dem Spreizkörper 33.1 gelöst und der Spreizkörper 33.1 entgegen der Setzrichtung des Exzenterbolzens 32.1 in Richtung des Pfeils 43 angehoben. Dabei werden die Winkelabschnitte 39.1 und 39.2 mittels der Verbreiterung 34.1 zusätzlich zur bereits erfolgten Verspannung gegen die freien Ränder 40.1 und 40.2 der Montageschiene 41.1 gepresst.

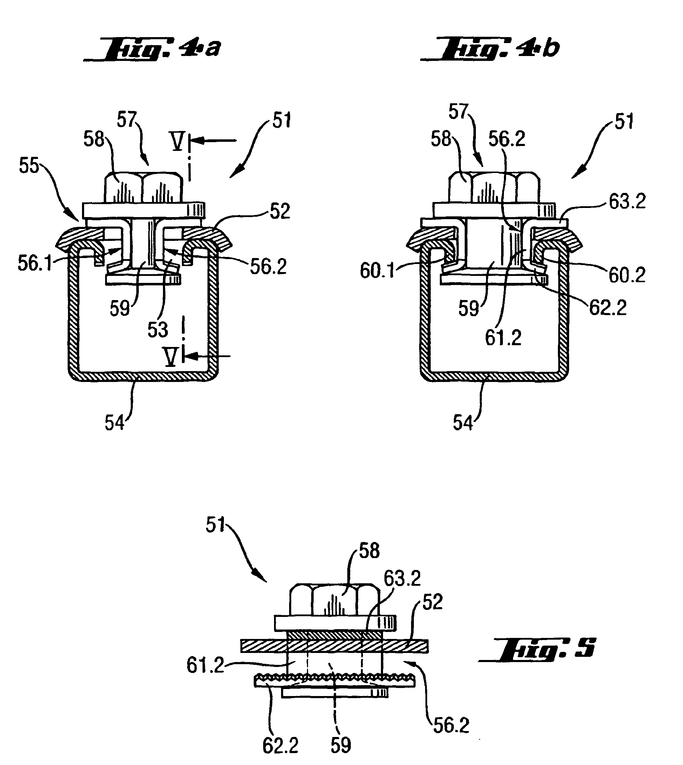

In Fig. 4a ist ein Schnitt durch ein drittes Ausführungsbeispiels des erfindungsgemässen Befestigungselements in der ersten Stellung des Hintergreifteils dargestellt und in Fig. 4b ist das dritte Ausführungsbeispiel des erfindungsgemässen Befestigungselements in der zweiten Stellung des Hintergreifteils gezeigt. Das Befestigungselement 51 weist anstelle eines Winkels eine Platte 52 zur stimaussenseitigen Beaufschlagung der, die Montageöffnung 53 begrenzenden Ränder der Montageschiene 54 auf. Das Befestigungselement 51 dient beispielsweise der Befestigung einer Leitungsstrang-Rohrschelle an z. B. der, an einem Untergrund angeordneten Montageschiene 54.

Das Hintergreifteil 55 weist zwei Leistenabschnitte 56.1 und 56.2 auf, die lateral verschieblich an dem Anschlag 52 gelagert sind. Durch Betätigen des, am Exzenterbolzens 57 vorgesehenen Sechskants 58 wird der Spreizkörper 59 verdreht und die Leistenabschnitte 56.1 und 56.2 von der ersten Stellung in die zweite Stellung in Richtung der, die Montageöffnung 53 begrenzenden freien Ränder 60.1, bzw. 60.2 verschoben.

Fig. 5 zeigt einen Schnitt, beziehungsweise eine Ansicht auf einen Leistenabschnitt des Hintergreifteils entlang der Linie V-V in der Fig. 4a. Der Leistenabschnitt 56.2 weist in der Ansicht eine im Wesentlichen T-förmige Ausgestaltung und im Schnitt eine im Wesentlichen C-förmige Ausgestaltung auf. Der Horizontalteil der T-förmigen Ausgestaltung ist durch den Winkelabschnitt 62.2 und der Vertikalteil der T-förmigen Ausgestaltung durch den Distanzabschnitt 61.2 gebildet, wobei der Distanzabschnitt 61.2 eine kürzere Längenerstreckung als der Winkelabschnitt 62.2 aufweist. Bezogen auf den Schnitt, wie er z. B. in den Fig. 4a und 4b dargestellt ist, dient der gegenüber dem Winkelabschnitt 62.2 angeordnete Schenkel 63.2 der C-förmigen Ausgestaltung des Leistenabschnitts 56.2 zur Auflage und Führung des Leistenabschnitts 56.2 bei dessen lateralen Verschiebung von der ersten Stellung in die zweite Stellung.

Zusammenfassend ist festzustellen, dass ein Befestigungselement geschaffen wurde, das eine hohe Sicherheit der Befestigung auch unter Querkraftbelastung des Befestigungselements gewährleistet. Das erfindungsgemässe Befestigungselement kann an einer beliebigen Stelle in der Montageöffnung des Hohlkörpers eingesetzt, entlang der Montageöffnung umpositioniert und an dem Hohlkörper befestigt werden.

## Patentansprüche

1. Befestigungselement (1; 31; 51) mit zumindest einem Hintergreifteil (7.1, 7.2; 38.1; 55) zum Einführen in eine Montageöffnung (3.1, 3.2; 53) eines Hohlkörpers (2.1, 2.2; 41.1; 54) in einer ersten Stellung und zum Hintergreifen von im Hohlkörper (2.1, 2.2; 41.1; 54) vorgesehenen Haltevorsprüngen (4.1, 4.2; 40.1, 40.2; 60.1, 60.2) in einer zweiten Stellung, sowie mit zumindest einem Anschlag (6; 52) zur stirnaussenseitigen Beaufschlagung der, die Montageöffnung (3.1, 3.2; 53) begrenzenden Ränder der Hohlkörperlängsseiten, und mit zumindest einem Befestigungsmittel (8.1, 8.2; 32.1, 32.2; 57), bei dessen Betätigung das zumindest eine Hintergreifteil (7.1, 7.2; 38.1; 55) von der ersten Stellung in die zweite Stellung bringbar ist, wobei das zumindest eine Hintergreifteil (7.1, 7.2; 38.1; 55) zumindest zwei Leistenabschnitte (9.1, 9.2; 56.1, 56.2) aufweist, die jeweils einen Distanzabschnitt (11.1; 11.2) und einen Winkelabschnitt (10.1, 10.2; 39.1, 39.2) umfassen, und wobei das Befestigungsmittel (8.1, 8.2; 32.1, 32.2; 57) einen Spreizkörper (16.1; 33.1; 59) zur lateralen Versetzung des zumindest einen Hintergreifteils (7.1, 7.2; 38.1; 55) von der ersten Stellung in die zweite Stellung aufweist, wobei der Spreizkörper (16.1; 33.1; 59) im Querschnitt eine im Wesentlichen rechteckige Ausgestaltung sowie jeweils an zumindest zwei diametral gegenüberliegenden Seiten eine Steuerungskontur (22.1, 22.2) mit einer gewölbten Fläche aufweist, **dadurch gekennzeichnet, dass** jeder der Leistenabschnitte (9.1, 9.2; 56.1, 56.2) an dem zumindest einen Anschlag (6; 52) beweglich gelagert ist, und dass der Spreizkörper (16.1; 33.1; 59) des Befestigungsmittels (8.1, 8.2; 32.1, 32.2; 57) am setzungsrichtungsseitigen Ende eine Verbreiterung (17.1; 34.1) des Querschnitts zum Hintergreifen der Winkelabschnitte (10.1, 10.2; 39.1, 39.2) aufweist.

2. Befestigungselement nach Anspruch 1, **dadurch gekennzeichnet, dass** jeder Leistenabschnitt (9.1. 9.2) an dem Anschlag (6) gelenkig gelagert ist.

3. Befestigungselement nach Anspruch 1 oder 2, **dadurch gekennzeichnet, dass** der Winkelabschnitt (10.1, 10.2; 39.1, 39.2) eine Profilierung für einen verbesserten Eingriff mit den Haltevorsprüngen (4.1, 4.2; 40.1, 40.2; 60.1, 60.2) im Hohlkörperinneren aufweist.

4. Befestigungselement nach Anspruch 3, **dadurch gekennzeichnet, dass** der Distanzabschnitt (61.2) eine kürzere Längenerstreckung als der Winkelabschnitt (62.2) aufweist.

5. Befestigungselement nach einem der Ansprüche 1 bis 4, **dadurch gekennzeichnet, dass** die zumindest zwei Leistenabschnitte (9.1, 9.2) des zumindest einen Hintergreifteils (7.1) mit einem Federelement (14) in der ersten Stellung gehalten sind.

6. Befestigungselement nach einem der Ansprüche 1 bis 5, **dadurch gekennzeichnet, dass** das Befestigungsmittel (8.1, 8.2; 32.1, 32.2; 57) an dessen, entgegen der Setzungsrichtung liegendem Ende ein Drehmomentübertragungsmittel, optional einen Sechskant (36.1; 58) aufweist.

7. Befestigungselement nach einem der Ansprüche 1 bis 6, **dadurch gekennzeichnet, dass** das Befestigungsmittel (8.1, 8.2; 32.1, 32.2; 57) eine Setzmarkierung, optional eine optische Setzmarkierung (13.2; 37.2) aufweist.

8. Befestigungselement nach einem der Ansprüche 1 bis 7, **dadurch gekennzeichnet, dass** der Anschlag einen Winkel (6) umfasst.

## Claims

1. Attachment element (1; 31; 51) with at least one clasp section (7.1, 7.2; 38.1; 55) for introducing a hollow body (2.1, 2.2; 41.1; 54), in a first position, into a mounting opening (3.1, 3.2; 53) and for clasping retaining projections (4.1, 4.2; 40.1, 40.2; 60.1, 60.2) in the hollow body (2.1, 2.2; 41.1; 54) and with at least one abutment means (6, 52) for end-face loading of the rims, of the longitudinal sides of the hollow body, bordering on the mounting opening (3.1, 3.2; 53), and with at least one attachment means (8.1, 8.2; 32.1, 32.2; 57), on operation of which the at least one clasp section (7.1, 7.2; 38.1; 55) can be brought from a first setting into a second setting, whereby the at least one clasp section (7.1, 7.2; 38.1; 55) has at least two strip sections (9.1, 9.2; 56.1, 56.2) that in each case comprise a separating section (11.1; 11.2) and an angle section (10.1, 10.2; 39.1, 39.2), and whereby the attachment means (8.1, 8.2; 32.1, 32.2; 57) has a spreader (16.1; 33.1; 59) for lateral displacement of the at least one clasp section (7.1, 7.2; 38.1; 55) from the first setting into the second setting, whereby the spreader (16.1; 33.1; 59) has, in its cross-section, an essentially rectangular form and a directing border (22.1, 22.2) with an arched surface, on, in each case two diametrically opposite sides, **characterized in that** each strip section (9.1, 9.2; 56.1, 56.2) is supported on the at least one abutment means (6; 52) such that it can move, and that the spreader (16.1; 33.1; 59) of the attachment means (8.1, 8.2; 32.1, 32.2; 57) has, on the end on the placing side, an extension (17.1; 34.1), of the cross-sectional form, for clasping the angle sections (10.1, 10.2; 39.1, 39.2).

2. Attachment element in accordance with claim 1, **characterized in that** each strip section (9.1, 9.2) is supported, articulated, on the abutment means (6).

3. Attachment element in accordance with claims 1 or 2, **characterized in that** the angle section (10.1, 10.2; 39.1, 39.2) is shaped for improved engagement with the retaining projections (4.1, 4.2; 40.1, 40.2; 60.1, 60.2) inside the hollow body.

4. Attachment element in accordance with claim 3, **characterized in that**, the separating section (61.2) has a shorter longitudinal extension than the angle section (62.2).

5. Attachment element in accordance with one of claims 1 to 4, **characterized in that** the at least two strip sections (9.1, 9.2) of the at least one clasp section (7.1) are held in the first setting with a spring element (14).

6. Attachment element in accordance with one of claims 1 to 5, **characterized in that** the attachment means (8.1, 8.2; 32.1, 32.2; 57) has, on the end opposite the placing direction, a torque transmission means, optionally a hexagon.

7. Attachment means in accordance with one of claims 1 to 6, **characterized in that** the attachment means (8.1, 8.2; 32.1, 32.2; 57) has a placing marking, optionally a visual placing marking (13.2, 37.2).

8. Attachment means in accordance with one of claims 1 to 7, **characterized in that** the abutment means includes an angle (6).

## Revendications

1. Élément de fixation (1 ; 31 ; 51) avec au moins une pièce de retenue arrière (7.1, 7.2 ; 38.1 ; 55) destinée, dans une première position, à être introduite dans une ouverture de montage (3.1, 3.2 ; 53) d'un corps creux (2.1, 2.2 ; 41.1 ; 54) et, dans une deuxième position, à passer derrière des saillies de retenue (4.1, 4.2 ; 40.1, 40.2 ; 60.1, 60.2) prévues dans le corps creux (2.1, 2.2 ; 41.1 ; 54), ainsi qu'avec au moins une butée (6 ; 52) pour solliciter le côté frontal extérieur des bords des côtés longitudinaux de corps creux qui limitent l'ouverture de montage (3.1, 3.2 ; 53), et avec au moins un moyen de fixation (8.1, 8.2 ; 32.1, 32.2 ; 57) dont l'actionnement permet d'amener la pièce de retenue arrière au nombre d'au moins une (7.1, 7.2 ; 38.1 ; 55) de la première position à la deuxième position, la pièce de retenue arrière au nombre d'au moins une (7.1, 7.2 ; 38.1 ; 55) comportant au moins deux portions de languettes (9.1, 9.2 ; 56.1, 56.2) qui comprennent chacune une portion d'écartement (11.1 ; 11.2) et une portion coudée (10.1, 10.2 ; 39.1, 39.2), et le moyen de fixation (8.1, 8.2 ; 32.1, 32.2 ; 57) comportant un corps d'expansion (16.1 ; 33.1 ; 59) pour déplacer latéralement la pièce de retenue arrière au nombre d'au moins une (7.1, 7.2 ; 38.1 ; 55) de la première position à la deuxième position, le corps d'expansion (16.1 ; 33.1 ; 59) possédant en coupe transversale une configuration sensiblement rectangulaire et, sur chacun d'au moins deux côtés diamétralement opposés, un profil de commande (22.1, 22.2) avec une surface bombée, **caractérisé en ce que** chacune des portions de languettes (9.1, 9.2 ; 56.1, 56.2) est montée de manière mobile sur la butée au nombre d'au moins une (6 ; 52) et **en ce que** le corps d'expansion (16.1 ; 33.1 ; 59) du moyen de fixation (8.1, 8.2 ; 32.1, 32.2 ; 57) comporte, à son extrémité côté direction de pose, un élargissement (17.1 ; 34.1) de la section transversale pour passer derrière les portions coudées (10.1, 10.2 ; 39.1, 39.2).

2. Élément de fixation selon la revendication 1, **caractérisé en ce que** chaque portion de languette (9.1, 9.2) est montée sur la butée (6) de manière articulée.

3. Élément de fixation selon la revendication 1 ou 2, **caractérisé en ce que** la portion coudée (10.1, 10.2 ; 39.1, 39.2) possède un profilage pour améliorer la prise avec les saillies de retenue (4.1, 4.2 ; 40.1, 40.2 ; 60.1, 60.2) à l'intérieur du corps creux.

4. Élément de fixation selon la revendication 3, **caractérisé en ce que** la portion d'écartement (61.2) possède une extension longitudinale plus courte que la portion coudée (62.2).

5. Élément de fixation selon une des revendications 1 à 4, **caractérisé en ce que** les portions de languettes au nombre d'au moins deux (9.1, 9.2) de la pièce de retenue arrière au nombre d'au moins une (7.1) sont maintenues dans la première position par un élément de ressort (14).

6. Élément de fixation selon une des revendications 1 à 5, **caractérisé en ce que** le moyen de fixation (8.1, 8.2 ; 32.1, 32.2 ; 57) comporte, à son extrémité située à l'opposé de la direction de pose, un moyen de transmission de couple, optionnellement un hexagone (36.1 ; 58).

7. Élément de fixation selon une des revendications 1 à 6, **caractérisé en ce que** le moyen de fixation (8.1, 8.2 ; 32.1, 32.2 ; 57) comporte un marquage de pose, optionnellement un marquage de pose optique (13.2 ; 37.2).

8. Élément de fixation selon une des revendications 1 à 7, **caractérisé en ce que** la butée comprend un coude (6).
